# EUROPÄISCHE PATENTANMELDUNG

(11) **EP 2 518 681 A1**
(43) Veröffentlichungstag der Anmeldung: **31.10.2012**
(21) Anmeldenummer: 12158807.3
(22) Anmeldetag: 09.03.2012
(51) Int. Cl.: G06Q 30/04, G06Q 10/06

(54) **Verfahren zur Benutzungsdatenerfassung eines Flurförderzeugs**

(30) Priorität: 27.04.2011 DE 102011018803
(71) Anmelder: STILL GmbH, 22113 Hamburg (DE)
(72) Erfinder: Mertes, Thomas, 22095 Hamburg (DE); Tödter, Dr., Joachim, 22391 Hamburg (DE)
(74) Vertreter: Geirhos, Johann

(57) **Zusammenfassung**

Bei einem Verfahren zur Benutzungsdatenerfassung eines Flurförderzeugs (1) mit mindestens einem Flurförderzeug (1), das Erfassungsmittel, insbesondere Sensoren, für die Erfassung von nutzungs- und/oder verschleißrelevanten Messgrößen, sowie eine drahtlose Datenübertragungsvorrichtung (12) umfasst, und mit einer drahtlosen Datenempfangsvorrichtung (16) sowie mit einer Recheneinheit (17), die mit der Datenempfangsvorrichtung (16) verbunden ist, werden durch die Erfassungsmittel die nutzungs- und/oder verschleißrelevanten Messgrößen erfasst. Die Messgrößen werden von der Datenübertragungsvorrichtung (12) und der Datenempfangsvorrichtung (16) an die Recheneinheit (17) übertragen und die Messgrößen werden von der Recheneinheit (17) verarbeitet und bewertet, um Benutzungsdaten zu bestimmen, insbesondere ein Nutzungsentgelt.

## Beschreibung

Die Erfindung betrifft ein Verfahren zur Benutzungsdatenerfassung eines Flurförderzeugs. Insbesondere betrifft die Erfindung ein Verfahren zur Benutzungsdatenerfassung einer Flurförderzeugflotte mit mindestens einem Flurförderzeug, das Erfassungsmittel, insbesondere Sensoren, für die Erfassung von nutzungs- und/oder verschleißrelevanten Messgrößen, sowie eine drahtlose Datenübertragungsvorrichtung umfasst, und mit einer drahtlosen Datenempfangsvorrichtung sowie mit einer Recheneinheit, die mit der Datenempfangsvorrichtung verbunden ist, wobei durch die Erfassungsmittel die nutzungs- und/oder verschleißrelevanten Messgrößen erfasst werden.

Flurförderzeuge werden insbesondere von Nutzern, die beispielsweise als Industrieunternehmen eine erhebliche Anzahl von Flurförderzeug als Fahrzeugflotte einsetzen, in zunehmendem Maße nicht mehr gekauft, sondern kurz-, mittel- oder langfristig geleast oder auch nur gemietet. Dies entspricht dem Wunsch der Nutzer, keinen eigenen Verwaltungsaufwand für eine Flurförderzeugflotte zu haben einschließlich des hierfür nötigen Personals, sondern eine Servicedienstleistung für einen beispielsweise monatlichen Rechnungsbetrag, oftmals einen festen Rechnungsbetrag, über eine bestimmte Laufzeit in Anspruch zu nehmen. Für die Abdeckung von Bedarfsspitzen von Nutzern werden auch kurzfristig und für beschränkte Zeiträume Flurförderzeuge auf Basis von speziellen Mietverträgen mit Bereithalteoption eingesetzt, für die ein entsprechendes Nutzungsentgelt zu entrichten ist.

Solche Miet- oder Leasingverträge werden auf der Grundlage festgelegter Einsatzprofile der Flurförderzeuge, in Hinsicht auf Betriebsstunden, zu fahrende Strecken aber auch Anzahl der Arbeitsspiele, z.B. der Hubvorrichtungen, wie auch Hubhöhen und sonstiger verschleißrelevanter Parameter kalkuliert und einer oder mehrere dieser Werte werden als Maß für das Nutzungsentgeld verwendet. Für die Nutzungsentgeldberechnung ist neben der Einsatzdauer insbesondere die Einsatzschwere von Bedeutung. Üblich ist, die Einsatzschwere durch Einschätzung grob zu klassifizieren, beispielsweise in: leicht; leicht bis mittel; mittel; mittel bis schwer; schwer.

Ein bekanntes Vorgehen bei der Gestaltung von Miet- oder Leasingverträgen ist es, zu Vertragsbeginn eine Vertragslaufzeit, eine jährliche Betriebsstundenzahl sowie eine Einsatzschwere zu definieren, von denen abhängig eine Monatsrate für das Nutzungsentgeld vereinbart wird. Für eine Mehr-/Mindernutzung wird z.B. je Betriebsstunde zu Vertragsbeginn ein entsprechender Ausgleichsbetrag vereinbart. Zu Vertragsende oder in regelmäßigen Abständen, z.B. alle 12 Monate, erfolgt ein Abgleich der vereinbarten und tatsächlich genutzten Betriebstunden und ein Zahlungsausgleich, sowie eventuell eine Anpassung der voraussichtlichen Betriebsstunden für die nächsten 12 Monate.

Zusätzlich besteht die Möglichkeit, Messungen auf dem Flurförderzeug vorzunehmen und die Daten auf dem Flurförderzeug während des Einsatzes zu Kenngrößen für die Einsatzschwere und Belastung des Flurförderzeugs zu verarbeiten. Mögliche Messgrößen sind Fahrzeuggeschwindigkeiten, Fahrtrichtungen, gefahrene Strecken vorwärts oder rückwärts, Beschleunigungen, Lastgewichte, Hubhöhen oder auch Drehzahlen sowie elektrische Ströme der Arbeitsmotoren. Die verarbeiteten Messgrößen werden an typischerweise PC-basierte Visualisierungsprogramme übertragen und stehen für die Weiterverarbeitung und Nutzungsentgeltberechnung zur Verfügung. Die Übertragung kann per Datenkabel, Datenkarte, oder Funk vom Flurförderzeug auf den PC als stationäre Einheit erfolgen.

Nachteil dieses System ist, dass dieses sehr starr und unflexibel ist. Da üblicherweise nicht nur ein Flurförderzeugtyp zum Einsatz kommt, sondern eine Vielzahl unterschiedlicher Typen, wie Mitgängergeräte, Stand-/Sitzgeräte, Schmalganggeräte, Gegengewichtsstapler sowie zusätzlich Flurförderzeuge von verschiedenen Herstellern in einer Fahrzeugflotte betrieben werden, stehen jeweils unterschiedliche Messgrößen zur Verfügung und besitzen die Messgrößen abhängig von den Gerätetypen auch eine unterschiedliche Relevanz. Zusätzlich liegt für Flurförderzeuge von Drittherstellern oft nur ein kleiner Teil der Messgrößen vor. Eine spezifische Anpassung der Datenverarbeitung für die unterschiedlichen Flurförderzeuge ist dann sehr aufwendig und wirtschaftlich auf dem einzelnen Flurförderzeug nicht sinnvoll.

Bekannt ist auch, Daten zu den einzelnen Fahrern und Bedienern von Flurförderzeugen zu erfassen und eine Fahrerhistorie zu bilden, etwa indem besondere Vorkommnisse, beispielsweise Unfallereignisse oder Beschädigungsereignisse des Flurförderzeugs, erfasst werden, die bei der Höhe des Nutzungsentgeldes mit einfließen können. Solche Fahrerdaten sollten aus Datenschutzgründen nicht in dem Flurförderzeug gespeichert sein.

Es ist auch denkbar, ähnliche Flurförderzeuge zu Klassen zusammenzustellen und für diese Klassen einheitliche Verfahren für die Ermittlung der Belastungsgrößen und damit der Entgelte aus den Messgrößen festzulegen. Bei Änderungen entsteht jedoch ein erheblicher Aufwand.

Schließlich ist nachteilig, dass in den Flurförderzeugen bei "Embedded-Systemen" der Fahrzeugcontroller Rechenleistung nur begrenzt zur Verfügung stellt und das Erweitern von Funktionen daher kritisch ist.

Der vorliegenden Erfindung liegt die Aufgabe zugrunde, ein Verfahren zur Benutzungsdatenerfassung zur Verfügung zu stellen, das die zuvor genannten Nachteile vermeidet.

Diese Aufgabe wird durch ein Verfahren mit den Merkmalen des unabhängigen Patentanspruch 1 gelöst. Vorteilhafte Weiterbildungen und Ausgestaltungen der Erfindung sind in den Unteransprüchen angegeben.

Die Aufgabe wird durch ein Verfahren zur Benutzungsdatenerfassung eines Flurförderzeugs gelöst, wobei bei dem Verfahren mindestens ein Flurförderzeug, welches Erfassungsmittel, insbesondere Sensoren, für die Erfassung von nutzungs- und/oder verschleißrelevanten Messgrößen, sowie eine drahtlose Datenübertragungsvorrichtung umfasst, und eine drahtlose Datenempfangsvorrichtung sowie eine Recheneinheit vorhanden ist, die mit der Datenempfangsvorrichtung verbunden ist. Durch die Erfassungsmittel werden die nutzungs- und/oder verschleißrelevanten Messgrößen erfasst und von der Datenübertragungsvorrichtung und der Datenempfangsvorrichtung an die Recheneinheit übertragen. Die Messgrößen werden von der Recheneinheit verarbeitet und bewertet, um Benutzungsdaten zu bestimmen, insbesondere ein Nutzungsentgelt.

Vorteilhaft können angepasst auf den jeweiligen Einsatz, den Nutzer der Flurförderzeuge und den Typ der Flurförderzeuge die Verfahren festgelegt werden, durch die die Recheneinheit die Benutzungsdaten, insbesondere ein Nutzungsentgeld, berechnet. Mit diesen Verfahren können für jedes Flurförderzeug einer Flurförderzeugflotte die benötigten Benutzungsdaten ermittelt werden. Mehrere Flurförderzeuge einer Flotte können an der Recheneinheit zu Nutzungsintensitätsklassen und somit zu Klassen mit gleichen Verarbeitungs- und Auswerteverfahren zusammengefasst werden. Weiterhin können an der Recheneinheit kundenspezifisch, angepasst an den jeweiligen Einsatz und den Flurförderzeugtyp die Verarbeitungs- und Bewertungsverfahren festgelegt werden. An der Recheneinheit kann für jedes Flurförderzeug einer Flotte oder eine Flurförderzeugklasse die aus den Messgrößen benötigten Kennwerte ermittelt werden, anhand denen die Benutzungsdaten, insbesondere das Nutzungsentgelt, ermittelt werden soll. Zur Berechnung der Benutzungsdaten, bzw. des Nutzungsentgelds, kann die Einsatzdauer und/oder auch das Fahrzeugalter und/oder auch ein Fahrerkennwert berücksichtigt werden. Die Verfahren lassen sich auf dem zentralen System der Recheneinheit bei Veränderungen leicht anpassen, ohne auf die Flurförderzeug zurückgreifen zu müssen, da die Flurförderzeug nur unbearbeitete oder nahezu unbearbeitete Daten, z.B. gemessene Messgrößen von Sensoren, übertragen. Vorteilhaft kann durch das erfindungsgemäße Verfahren berücksichtigt werden, dass von den Flurförderzeugen unterschiedliche Messgrößen zur Verfügung stehen. Wenn die Art der Messgrößen oder Daten, die Art ihrer Verarbeitung oder ihre Gewichtung verändert werden muss, kann dies durch das erfindungsgemäße Verfahren kostengünstig und direkt in der Recheneinheit an einer Stelle durch eine Programmanpassung geschehen. Schließlich wird auch eine nachträgliche Korrektur von Daten bzw. bearbeiteten Messgrößen möglich und durch eine abgespeicherte Datenhistorie wird erkennbar, wie sich diese Korrektur auf das Berechnungsergebnis der Benutzungsdaten, bzw. des Nutzungsentgeldes auswirkt. Veränderungen der Benutzungsdaten, der Verfahren zu deren Berechnung aber auch der Messgrößen lassen sich gut nachvollziehbar in Datenprotokollen ablegen. Dies ist auf Fahrzeugebene mit vertretbarem Aufwand nicht umsetzbar, zumindest für die rohen Messgrößen schnell sehr speicherintensiv. Aus diesen Gründen bietet es deutliche Vorteile, die Auswertung der rohen Messgrößen zentral erst auf der Rechnereinheit und nicht auf Fahrzeugebene des Flurförderzeugs vorzunehmen.

In günstiger Ausführungsform des erfindungsgemäßen Verfahrens werden die Messgrößen unmittelbar ohne Zwischenspeicherung an die Recheneinheit übertragen.

In der einfachsten Ausführungsform werden Sensordaten ohne jegliche Bearbeitung z.B. über einen CAN-Bus des Flurförderzeugs und eine eventuell bereits vorhandene drahtlose Datenübertragungsvorrichtung von dem Flurförderzeug stetig gesandt. Dies ist auf einfache Weise und kostengünstig bei dem Flurförderzeug technisch umsetzbar.

Die drahtlose Datenübertragungsvorrichtung und die Datenempfangsvorrichtung können ein WLAN oder einen paketorientierten Dienst nutzen.

WLAN Sende- bzw. Empfangseinrichtungen stehen kostengünstig zur Verfügung und das entsprechende Datenprotokoll kann gut in bestehende Systeme des Flurförderzeug integriert werden. Der Anschluss an Recheneinheiten ist problemlos möglich. Paketorientierte Dienste GPRS sind als UMTS oder GSM sowie weitere Mobilfunknetzprotokolle bekannt und stehen ebenfalls kostengünstig zur Verfügung. Die Übertragung kann in den entsprechenden Funkfrequenzen der jeweiligen Systeme erfolgen, aber auch in freien Frequenzfenstern, beispielsweise dem 866 MHz-Band.

Vorteilhaft werden die Messgrößen durch die Rechnereinheit komprimiert und auf einer Bedienoberfläche eines Bildschirms dargestellt.

In einer günstigen Ausführungsform ist eine Mehrzahl von Flurförderzeugen vorhanden und es werden diese Flurförderzeuge in Klassen gleicher Flurförderzeuge oder gleicher bzw. ähnlicher Auswerteverfahren zusammengefasst, die von der Recheneinheit in gleicher Weise verarbeitet und bewertet werden.

Die Rechnereinheit kann ein Personalcomputer, ein Rechnernetzwerk, oder ein Webportal sein.

Durch entsprechende Zugriffsberechtigungen kann dabei sicher gestellt werden, dass nur solche Veränderungen der Berechnungsverfahren durchgeführt werden können, die zwischen dem Nutzungsentgeldpflichtigen und dem Nutzungsentgeldempfänger vereinbart sind.

Die Messgrößen können Fahrzeuggeschwindigkeit und/oder Fahrtrichtung und/oder gefahrene Strecke vorwärts und/oder gefahrene Strecke rückwärts und/oder Beschleunigung und/oder Lastgewicht und/oder Hubhöhe und/oder Betriebsstunden und/oder Drehzahlen sowie Ströme von Arbeitsmotoren umfassen.

Vorteilhaft umfassen die Messgrößen ein Belegungssignal eines Fahrersitzes und/oder ein Fahreridentifizierungssignal.

Weitere Vorteile und Einzelheiten der Erfindung werden anhand des in der Figur dargestellten Ausführungsbeispiels näher erläutert. Hierbei zeigt die Figur ein Flurförderzeug, auf dem ein erfindungsgemäßes Verfahren abläuft.

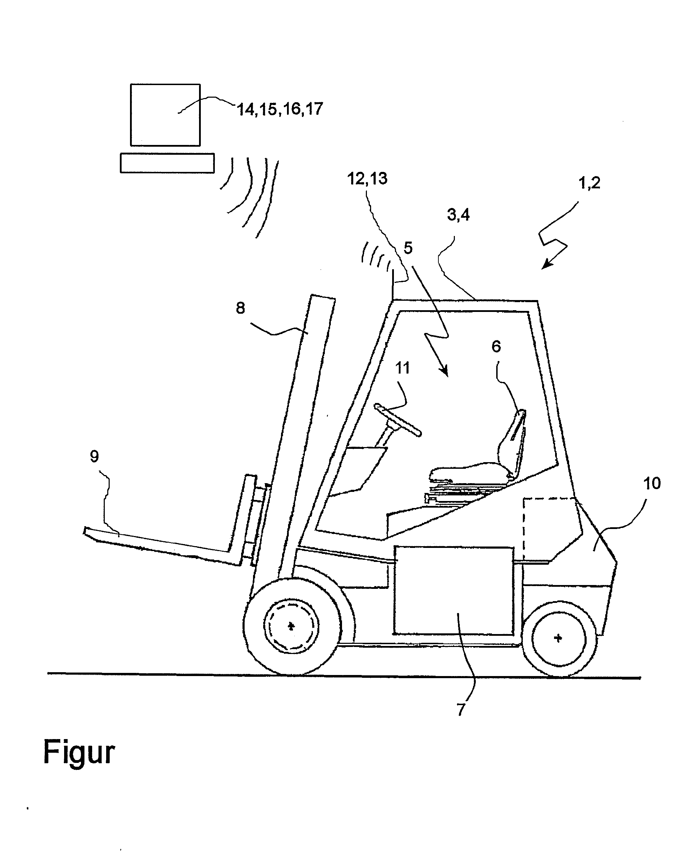

Die Fig. 1 zeigt ein Flurförderzeug 1 einer Flurförderzeugflotte, das hier beispielsweise als Gegengewichtsgabelstapler 2 ausgebildet ist. Das Flurförderzeug 1 weist eine Fahrerkabine 3 als Fahrgastraum 4 auf, in dem sich ein Fahrerarbeitsplatz 5 mit einem Fahrersitz 6 und einem Lenkrad 11 befindet.

Das dargestellte Flurförderzeug 1 ist beispielsweise als elektrisch, insbesondere batterie-elektrische angetriebene Arbeitsmaschine ausgebildet und wird über nicht dargestellte Elektromotoren angetrieben. Zur Energieversorgung weist die mobile Arbeitsmaschine 1 eine Batterie 7 auf. An einem Hubmast 8 ist eine Lastgabel 9 zur Aufnahme einer Last angeordnet, wobei das Gewicht dieser Last durch ein Gegengewicht 10 ausgeglichen wird.

Eine drahtlose Datenübertragungsvorrichtung 12, hier in Form einer WLAN-Antenne 13, ermöglicht das Versenden von Messgrößen an einen Computer 14 mit WLAN-Empfangseinrichtung 15 als Datenempfangsvorrichtung 16 und Recheneinheit 17. Als Messgrößen werden die Fahrzeuggeschwindigkeit, die Fahrtrichtung, die gefahrene Streck vorwärts und rückwärts, die Beschleunigung, das Lastgewicht, die Hubhöhe, die Gesamtbetriebsstunden, die Drehzahlen sowie Ströme der Elektromotoren sowie ein Belegungssignal des Fahrersitzes 6 und ein z.B. durch einen RFID-Transponder gewonnenes Fahreridentifizierungssignal übertragen. Diese Messgrößen werden an dem Flurförderzeug 1 durch nicht näher dargestellte Erfassungsmittel, beispielsweise entsprechende Sensoren, erfasst. Aus diesen Messgrößen berechnet die Recheneinheit 17 Benutzungsdaten, die die Beanspruchung des Flurförderzeug 1 wiedergeben, insbesondere ein Nutzungsentgeld.

## Patentansprüche

1. Verfahren zur Benutzungsdatenerfassung eines Flurförderzeugs (1) mit mindestens einem Flurförderzeug (1), das Erfassungsmittel, insbesondere Sensoren, für die Erfassung von nutzungs- und/oder verschleißrelevanten Messgrößen, sowie eine drahtlose Datenübertragungsvorrichtung (12) umfasst, und
mit einer drahtlosen Datenempfangsvorrichtung (16) sowie mit einer Recheneinheit (17), die mit der Datenempfangsvorrichtung (16) verbunden ist, wobei durch die Erfassungsmittel die nutzungs- und/oder verschleißrelevanten Messgrößen erfasst werden,
**dadurch gekennzeichnet,**
**dass** die Messgrößen von der Datenübertragungsvorrichtung (12) und der Datenempfangsvorrichtung (16) an die Recheneinheit (17) übertragen werden und die Messgrößen von der Recheneinheit (17) verarbeitet und bewertet werden, um Benutzungsdaten zu bestimmen, insbesondere ein Nutzungsentgelt.

2. Verfahren nach Anspruch 1,
**dadurch gekennzeichnet,**
**dass** die Messgrößen unmittelbar ohne Zwischenspeicherung an die Recheneinheit (17) übertragen werden.

3. Verfahren nach Anspruch 1 oder 2,
**dadurch gekennzeichnet,**
**dass** die drahtlose Datenübertragungsvorrichtung (12) und die Datenempfangsvorrichtung (16) ein WLAN oder einen paketorientierten Dienst nutzen.

4. Verfahren nach einem der Ansprüche 1 bis 3,
**dadurch gekennzeichnet,**
**dass** die Messgrößen durch die Rechnereinheit (17) komprimiert und auf einer Bedienoberfläche eines Bildschirms dargestellt werden.

5. Verfahren nach einem der Ansprüche 1 bis 4,
**dadurch gekennzeichnet,**
**dass** eine Mehrzahl von Flurförderzeugen (1) vorhanden ist und diese Flurförderzeuge (1) in Klassen gleicher Flurförderzeuge (1) oder gleicher bzw. ähnlicher Auswerteverfahren zusammengefasst werden, die von der Recheneinheit (17) gleich verarbeitet und bewertet werden.

6. Verfahren nach einem der Ansprüche 1 bis 5,
**dadurch gekennzeichnet,**
**dass** die Rechnereinheit (17) ein Personalcomputer (13), ein Rechnernetzwerk, oder ein Webportal ist.

7. Verfahren nach einem der Ansprüche 1 bis 6,
**dadurch gekennzeichnet,**
**dass** die Messgrößen Fahrzeuggeschwindigkeit und/oder Fahrtrichtung und/oder gefahrene Streck vorwärts und/oder gefahrene Strecke rückwärts und/oder Beschleunigung und/oder Lastgewicht und/oder Hubhöhe und/oder Betriebsstunden und/oder Drehzahlen sowie Ströme von Arbeitsmotoren umfassen.

8. Verfahren nach einem der Ansprüche 1 bis 7,
**dadurch gekennzeichnet,**
**dass** die Messgrößen ein Belegungssignal eines Fahrersitzes und/oder ein Fahreridentifizierungssignal umfassen.
